# EUROPEAN PATENT SPECIFICATION

(11) **EP 3 938 723 B1**
(45) Date of publication and mention of the grant of the patent: **11.12.2024**
(21) Application number: 20706782.8
(22) Date of filing: 04.03.2020
(51) Int. Cl.: F25D 23/10, F16B 12/04

(54) **FIXING SYSTEM OF A BUILT-IN DOMESTIC APPLIANCE TO A FURNITURE AND METHOD FOR FIXING A BUILT-IN DOMESTIC APPLIANCE TO A FURNITURE**
BEFESTIGUNGSSYSTEM EINES EINBAUHAUSHALTSGERÄTS AN EINEM MÖBELSTÜCK UND VERFAHREN ZUR BEFESTIGUNG EINES EINBAUHAUSHALTGERÄTS AN EIN MÖBELSTÜCK
SYSTÈME DE FIXATION D'UN APPAREIL DOMESTIQUE INTÉGRÉ SUR UN MEUBLE ET PROCÉDÉ DE FIXATION D'UN APPAREIL DOMESTIQUE INTÉGRÉ SUR UN MEUBLE

(30) Priority: 13.03.2019 EP 19000125
(43) Date of publication of application: 19.01.2022
(73) Proprietor: ELECTROLUX APPLIANCES AKTIEBOLAG, 105 45 Stockholm (SE)
(72) Inventor: BALDO, Federico, 33080 Porcia PN (IT); NAIBO, Sergio, 33080 Porcia PN (IT); RICKLIN, Adrian, 33080 Porcia PN (IT); PELLICANO, Gianandrea, 33080 Porcia PN (IT)
(74) Representative: Electrolux Group Patents
(86) International application number: PCT/EP2020/055749
(87) International publication number: WO 2020/182586

(56) References cited:
- EP-A1- 2 722 623
- EP-A1- 2 789 951
- WO-A1-90/10362
- CN-U- 207 347 501
- DE-A1- 102010 031 485
- JP-A- 2000 179 137
- KR-A- 20110 000 953
- KR-B1- 100 766 108

## Description

### TECHNICAL FIELD

The present invention relates to the fixing of a built-in domestic appliance inside a furniture.

The present invention finds advantageous application in the fixing of a built-in refrigerator inside a furniture, to which the following treatment will make explicit reference without losing its generality.

### PRIOR ART

Nowadays, the built-in refrigerators, i.e. the refrigerators intended to be fixed inside a kitchen furniture, are fixed to the furniture by means of screw fixing systems.

In detail, currently to fix a built-in refrigerator inside a kitchen furniture, after placing the built-in refrigerator inside the kitchen furniture so that a first lateral wall of the built-in refrigerator is flanked and substantially in contact with a first lateral wall of the kitchen furniture and a second wall lateral of the built-in refrigerator is flanked and substantially in contact with a second lateral wall of kitchen furniture, an operator must screw a plurality of fixing screws between the first lateral wall of the built-in refrigerator and the first lateral wall of the kitchen furniture and a second plurality of fixing screws between the second lateral wall of the built-in refrigerator and the second lateral wall of kitchen furniture.

Subsequently, in order to connect the door of the built-in refrigerator to the door of the kitchen furniture, the operator must screw a guide profile (typically with a "T" cross section) to the door of the kitchen furniture by means of a third plurality of fixing screws, and he must fix a sled (typically with a "C" cross-section) at the edge of the door of the refrigerator, after having coupled the sled to the guide profile, so that the sliding coupling between the sled and the guide profile allows to open and close simultaneously the door of the kitchen furniture and the door of the built-in refrigerator.

Screw fixing systems require the use of screwdrivers (often of different shape and size since the fixing screws are not all the same) and they also require a certain skill in handling the screwdrivers, since at least some of the fixing screws are arranged in relatively uncomfortable position to reach. Moreover, when a built-in refrigerator is removed from a furniture (for example, to perform a repair operation), there is a (high) risk of losing one or more fixing screws, especially when the built-in refrigerator is reassembled in the furniture only after some days.

In light of what above, it is clear that the known screw fixing techniques require a certain amount of experience and practicality in the execution of the operations described above in order to correctly fix the built-in refrigerator inside the furniture and, at the same time, minimize the risk of damage to the furniture or the built-in refrigerator. Therefore, currently to mount, or disassemble, a built-in refrigerator in, or from, a furniture it is necessary to have a good dose of manual skills or it is necessary the assistance of a skilled operator, with a consequent cost increase. Relevant prior art can be found in KR 100 766 108 B1.

### DESCRIPTION OF THE INVENTION

The object of the present invention is to provide a fixing system and a method for fixing a built-in domestic appliance inside a furniture which are free from the drawbacks described above and which, in particular, allow to simplify and speed up the fixing, i.e. assembly, and the separation, i.e. dismantling, of a built-in domestic appliance inside a furniture.

According to the present invention, there is provided a fixing system of a built-in domestic appliance to a furniture and a method for fixing a built-in domestic appliance to a furniture, in accordance with what is described in the attached claims.

A fixing system according to claim 1 includes:
a first fixing element comprising a first adhesive surface suitable to be glued to a first lateral wall of the built-in domestic appliance, a second adhesive surface parallel and opposite to the first surface adhesive and suitable to be glued to a first lateral wall of the furniture, a first removable protective film which initially covers the first adhesive surface, and a second removable protective film which initially covers the second adhesive surface; and
a second fixing element comprising a third adhesive surface suitable to be glued to a second lateral wall of the built-in domestic appliance and a fourth adhesive surface parallel and opposite to the third adhesive surface and suitable to be glued to a second lateral wall of the furniture, a third removable protective film which initially covers the third adhesive surface, and a fourth removable protective film which initially covers the fourth adhesive surface.

Preferably, the first removable protective film and/or the second removable protective film has a first graspable removal flap which extends beyond the first adhesive surface and/or the second adhesive surface to protrude outside the first lateral wall of the built-in domestic appliance when the built-in domestic appliance is inserted inside the furniture.

Preferably, the third removable protective film and/or the fourth removable protective film has a second graspable removal flap which extends beyond the third adhesive surface and/or the fourth adhesive surface to protrude outside the second lateral wall of the built-in domestic appliance when the built-in domestic appliance is inserted inside the furniture.

Preferably, the first fixing element comprises a first separable/joinable several times connecting device which is interposed between the first adhesive surface and the second adhesive surface.

Preferably, the second fixing element comprises a second separable/joinable several times connecting device which is interposed between the third adhesive surface and the fourth adhesive surface.

Preferably, the first separable/joinable several times connecting device comprises a first body which supports the first adhesive surface and a second body which supports the second adhesive surface and is connected to the first body in such a way to be separable/joinable several times.

Preferably, the second separable/joinable several times connecting device comprises a third body which supports the third adhesive surface and a fourth body which supports the fourth adhesive surface and is connected to the third body in such a way to be separable/joinable several times.

Preferably, each separable connecting device uses a closure system with micro-slots and micro-hooks.

The second fixing element comprises a spacer group which is interposed between the third adhesive surface and the fourth adhesive surface and has an adjustable thickness to vary the distance between the third adhesive surface and the fourth adhesive surface.

Preferably, according to a first embodiment of the second fixing element, the spacer group comprises: an inner plate which is connected to the third adhesive surface; an outer plate which is connected to the fourth adhesive surface; a cylindrical seat solidally constrained to the inner plate or the external plate; and an adjustment element which is inserted in the cylindrical seat, is rotatably mounted to the outer plate or to the inner plate, and is adapted to be rotated relative to the cylindrical seat to vary the distance between the two plates.

Preferably, the cylindrical seat is threaded and the adjustment element is threaded and screwed into the cylindrical seat.

Preferably, the two plates are connected to each other by means of an "U" shaped flexible connecting element.

Preferably, according to a second embodiment of the second fixing element, the spacer group comprises: an inner plate which is connected to the third adhesive surface; an outer plate which is connected to the fourth adhesive surface; a first adjustment element and a second adjustment element, which are interposed between the inner plate and the outer plate, are connected to two plates, and are designed to be movable with respect to each other between an initial position, wherein the distance between the two plates is minimal, and a final position, wherein the distance between the two plates is maximum.

Preferably, the first adjustment element comprises a first coupling portion; the second adjustment element comprises a second coupling portion; and the first coupling portion and the second coupling portion are arranged and shaped to overlap, at least partially, with each other, when the first adjustment element and the second adjustment element move from the initial position to the final position, so as to increase the distance between the two plates.

Preferably, the first adjustment element and the second adjustment element are rotable to each other and comprise gripping means, which are adapted to be grasped to rotate the first adjustment element and the second adjustment element with respect to each other and extend beyond the inner plate and the outer plate to protrude outside the second lateral wall of the built-in domestic appliance, when the built-in domestic appliance is inserted inside the furniture.

Preferably, the spacer assembly comprises securing means to prevent the rotation of the first adjustment element and the second adjustment element with respect to each other, once a desired position has been reached.

Preferably, the second fixing element comprises a removable reference plate which extends in a direction orthogonal to the third and fourth adhesive surfaces to abut against an inner edge of the door of the furniture when the second fixing element is resting on the second lateral wall of the furniture so as to allow correct arrangement of the second fixing element.

Preferably, the fixing system comprises: a guide profile; a third fixing element comprising a fifth adhesive surface suitable to be glued to the door of the furniture, a sixth adhesive surface parallel and opposite to the fifth adhesive surface and suitable to be glued to the guide profile, and a fifth removable protective film which initially covers the fifth adhesive surface; and a sled which can be fixed to a door of the built-in domestic appliance and shaped to can slidably be coupled to the guide profile.

Preferably, the third fixing element comprises a third separable/joinable several times connecting device which is interposed between the fifth adhesive surface and the sixth adhesive surface.

Preferably, the third separable/joinable several times connecting device comprises a fifth body which supports the fifth adhesive surface and a sixth body which supports the sixth adhesive surface and is connected to the fifth body in such a way to be separable/joinable several times.

The method for fixing a built-in domestic appliance to a furniture according to claim 16 includes the step of:
gluing the second adhesive surface of the first fixing element to the first lateral wall of the furniture, by first removing the second protective film;
gluing the fourth adhesive surface of the second fixing element to the second lateral wall of the furniture, by first removing the fourth protective film;
inserting the built-in domestic appliance into the furniture, leaving in position the first removable protective film and the third protective film;
removing the first removable protective film to glue the first adhesive surface of the first fixing element to the first lateral wall of the built-in domestic appliance; and
removing the third removable protective film to glue the third adhesive surface of the second fixing element to the second lateral wall of the built-in domestic appliance.

Preferably, the method for fixing a built-in domestic appliance to a furniture comprising, after gluing the fourth adhesive surface of the second fixing element to the second lateral wall of the furniture and before inserting the built-in domestic appliance into the furniture, the further step of adjusting the thickness of the spacer group so that, once the built-in domestic appliance has been inserted into the furniture, the first lateral wall of the built-in domestic appliance to be contact with the first adhesive surface and the second lateral wall of the built-in appliance to be in contact with the third adhesive surface.

Preferably, includes also the step of: gluing the sixth adhesive surface to the guide profile; fixing the sled to a door of the built-in domestic appliance; coupling the sled with the guide profile before or after having fixed the sled to the door of the built-in domestic appliance; and gluing the fifth adhesive surface to the door of the furniture, by first removing the fifth removable protective film and by closing the door of the furniture towards the door of the built-in domestic appliance supporting the sled and the guide profile.

### BRIEF DESCRIPTION OF THE DRAWINGS

The present invention will be described with reference to the attached drawings, which illustrate some nonlimiting examples of embodiment thereof, in which:
- figure 1 is a perspective view of a built-in refrigerator fixed inside a furniture with a fixing system in accordance with the present invention;
- figure 2 is a perspective view of a first fixing element of the fixing system of the invention;
- figures 3 and 4 are two different perspective views of a second fixing element of the fixing system according to a first embodiment;
- figure 5 is a longitudinal section of the second fixing element of figures 3 and 4 fixed to a wall of the furniture;
- figures 6 and 7 are two plane views of a second fixing element of the fixing system according to a second embodiment;
- figure 8 is a perspective and in enlarged scale view of the detail W of the figure 7;
- figures 9A, 9B and 9C are schematic views of the operation of the second fixing element of figures 6 and 7, in three different operating positions;
- figure 10 is a schematic view of a third fixing element of the fixing system of the invention;
- figure 11 is a schematic view of a variant of the third fixing element of figure 10; and
- figures from 12 to 16 show schematic views of the successive fixing steps to fix the built-in refrigerator inside the furniture, according to the fixing method of the invention.

### PREFERRED EMBODIMENTS OF THE INVENTION

In the attached figures, the number 1 indicates as whole a fixing system for a built-in refrigerator 2 inside a kitchen furniture 3.

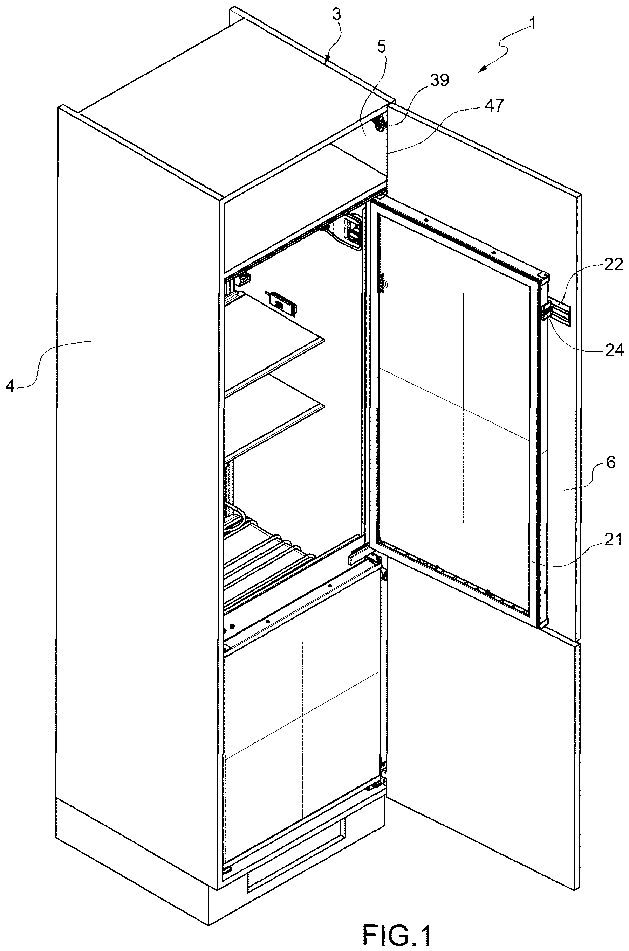

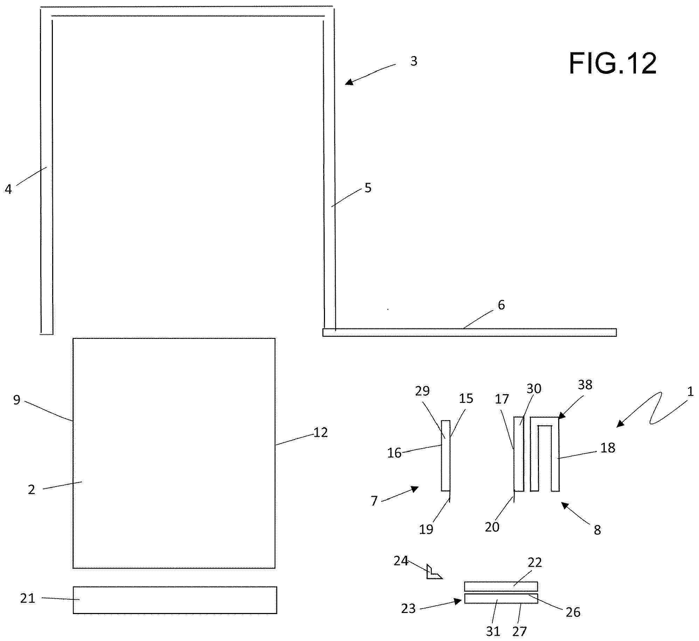

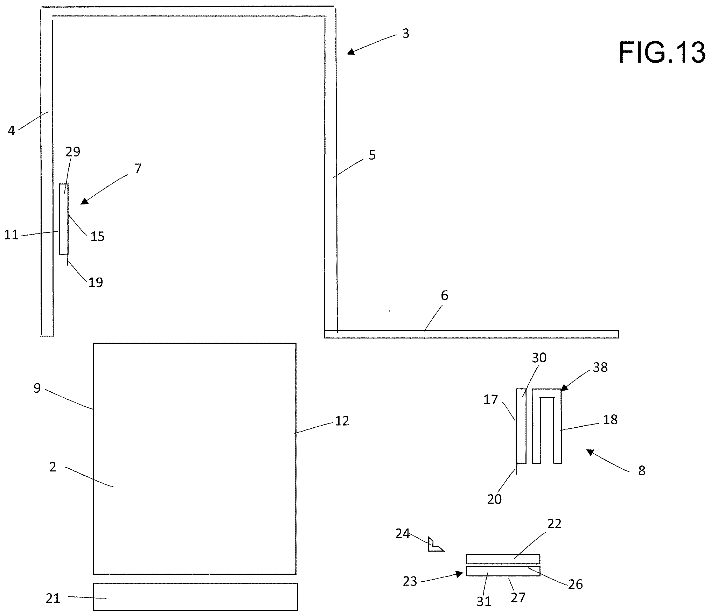

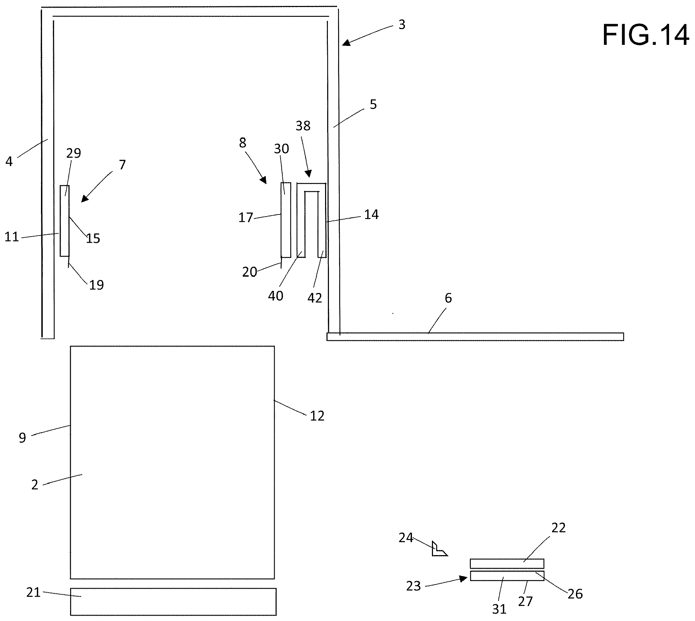

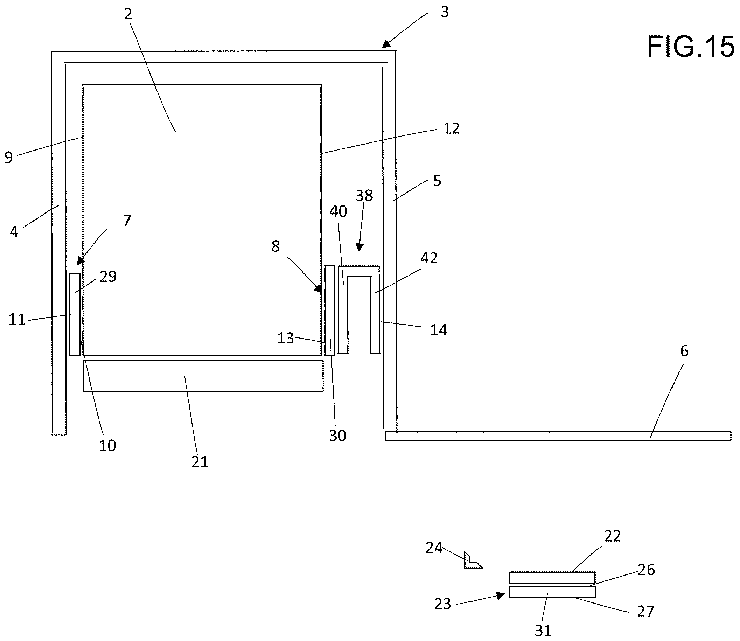

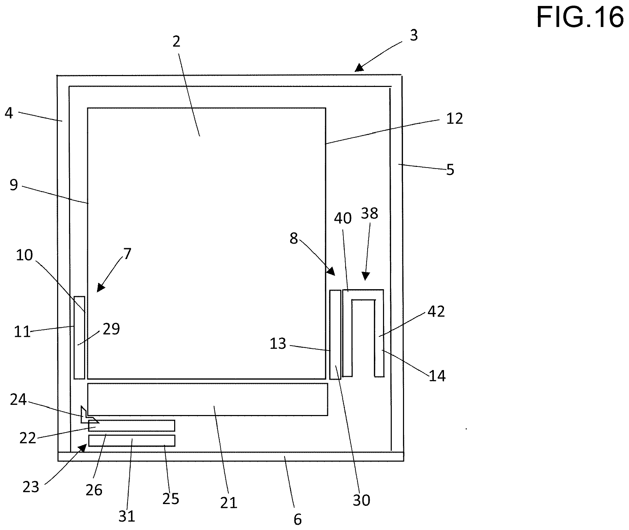

According to what is illustrated in figure 1 and in figures 12-16, the furniture 3 has a lateral wall 4, a lateral wall 5 which is parallel and opposite to the lateral wall 4, and a door 6 which is hinged to the lateral wall 5.

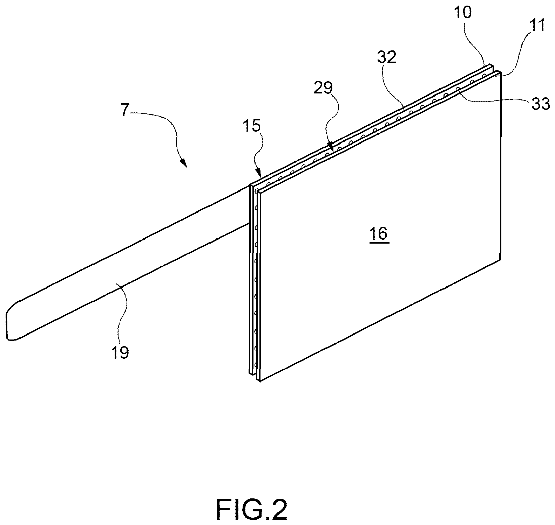

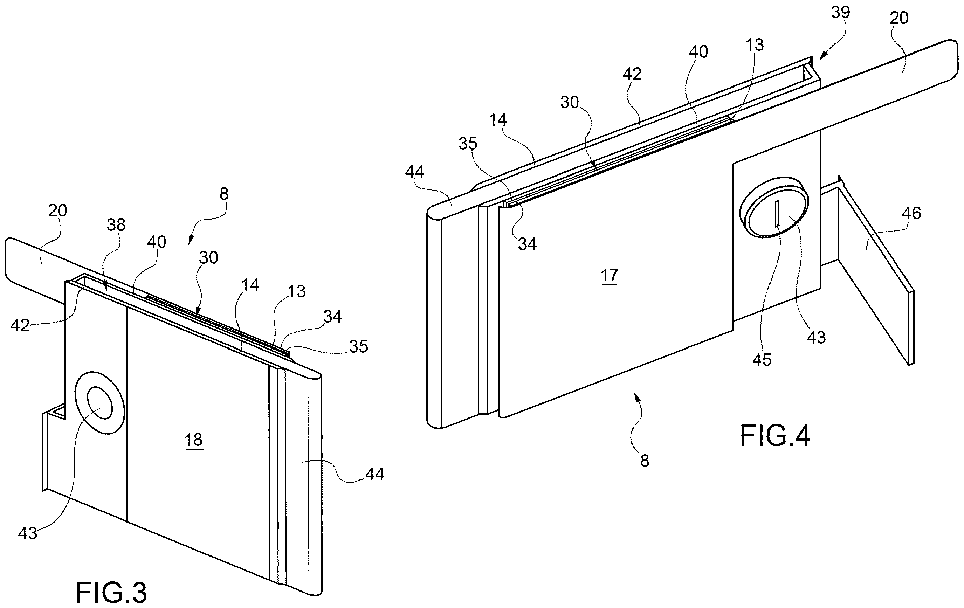

The fixing system 1 illustrated in the attached figures comprises a fixing element 7 (shown in figure 2) and a fixing element 8 (shown in figures 3, 4, 6 and 7).

The fixing element 7 illustrated in figure 2 is suitable to fix a lateral wall 9 of the built-in refrigerator 2 to the lateral wall 4 of the furniture 3; the fixing element 7 has an adhesive surface 10 which, in use, is glued to a lateral wall 9 of the built-in refrigerator 2 and an adhesive surface 11, which is parallel and opposite the adhesive surface 10, and which, in use, is glued to the lateral wall 4 of the furniture 3.

The fixing element 8 illustrated in figures 3, 4, 6 and 7 is suitable, instead, to fix a lateral wall 12 of the built-in refrigerator 2 to the lateral wall 5 of the furniture 3; the fixing element 8 has an adhesive surface 13 which, in use, is glued to the lateral wall 12 of the built-in refrigerator 2 and an adhesive surface 14, which is parallel and opposite to the adhesive surface 13, and which, in use, is glued to the lateral wall 5 of the furniture 3.

As shown in figures 2, 3, 4, 6 and 7 the adhesive surfaces 10-11 and 13-14 are initially covered by respective removable protective films 15, 16, 17 and 18: a removable protective film 15 is arranged on the adhesive surface 10; a removable protective film 16 is arranged on the adhesive surface 11; a removable protective film 17 is arranged on the adhesive surface 13, and a removable protective film 18 is arranged on the adhesive surface 14.

Furthermore, preferably, the removable protective film 15 has a graspable removal flap 19 extending beyond the adhesive surface 10 so that, when the adhesive surface 10 is resting on the lateral wall 9 of the built-in refrigerator 2, the graspable removal flap 19 protrudes outwardly from the lateral wall 9 of the built-in refrigerator 2 (and therefore it can be easily grasped by an installer to be pulled, so as to remove the removable protective film 15). Similarly, the removable protective film 17 preferably has a graspable removal flap 20 extending beyond the adhesive surface 13 so that, when the adhesive surface 13 is resting on the lateral wall 12 of the 2 built-in refrigerator 2, the graspable removal flap 20 protrudes outwardly from the lateral wall 12 of the 2 built-in refrigerator 2 (and therefore it can be easily grasped by an installer to be pulled so as to remove the removable protective film 17).

In this way, the installer who fixes the built-in refrigerator 2 in the furniture 3 can easily remove the removable protective films 15 and 17, by pulling the respective graspable removal flaps 19 and 20, after inserting the built-in refrigerator 2 inside of the furniture 3 in the correct position.

In this regard, preferably each removable protective film 15 and 17 is made of a low-friction smooth material so as to permit the built-in refrigerator 2 to slide between the removable protective films 15 and 17, reducing friction to a minimum.

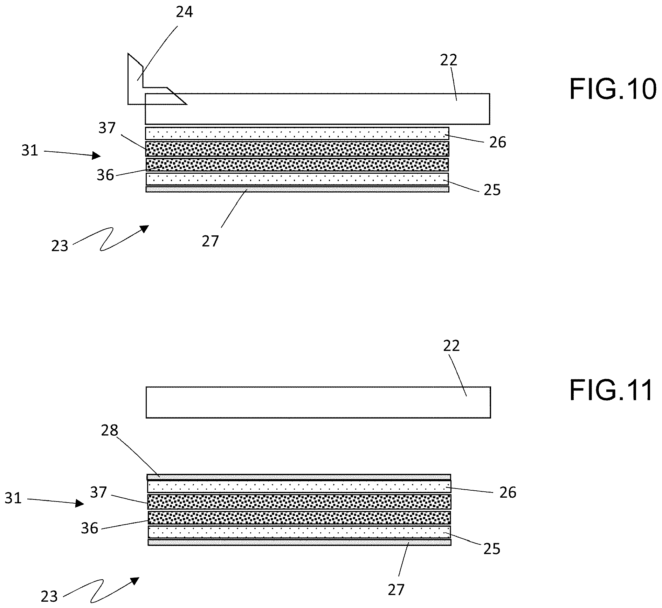

As shown in figure 10, to fix a door 21 of the built-in refrigerator 2 to the door 6 of the furniture 3, the fixing system 1 shown in the attached figures preferably comprises a guide profile 22 intended to be fixed to the door 6 of the furniture 2 through a fixing element 23 (shown in figures 10-16) and a sled 24 intended to be fixed to the door 21 of the built-in refrigerator 2 and shaped so that it can be slidably coupled to the guide profile 22.

In detail and as illustrated in figure 10, the fixing element 23 preferably comprises an adhesive surface 25 intended to be glued to the door 6 of the furniture 3 and an adhesive surface 26, which is parallel and opposite the adhesive surface 25, and is intended to be glued to the guide profile 22. Preferably, the adhesive surface 26 of the fixing element 23 is glued from the beginning to the guide profile 22 (i.e. the guide profile 22 is already glued to the fixing element 23 and therefore this gluing operation must not be carried out by the installer); in this case, the fixing element 23 comprises a single removable protective film 27, which is arranged to initially cover the adhesive surface 25, i.e. before the adhesive surface 25 is glued to the door 6 of the furniture 3. According to a different embodiment shown in figure 11, initially the fixing element 23 is apart from the guide profile 22 and therefore the fixing element 23 comprises a further removable protective film 28 to initially cover the adhesive surface 26, i.e. before the adhesive surface 26 is glued to the guide profile 22.

According to what shown in figure 2, the fixing element 7 preferably comprises a separable/joinable several times connecting device 29 which is interposed between the adhesive surface 10 and the adhesive surface 11. As shown in figures 3, 4, and 7 the fixing element 8 comprises a separable/joinable several times connecting device 30 which is interposed between the adhesive surface 13 and the adhesive surface 14. As shown in figures 10 and 11, the fixing element 23 preferably comprises a separable/joinable several times connecting device 31 which is interposed between the adhesive surface 25 and the adhesive surface 26.

The connecting devices 29, 30 and 31, advantageously, allow to separate and subsequently join together, respectively, the adhesive surfaces 10 and 11, the adhesive surfaces 13 and 14, and the adhesive surfaces 25 and 26, thus allowing the disassembly of the built-in refrigerator 2 from the furniture 3 and the subsequent re-assembly of the built-in refrigerator 2 into the furniture 3.

According to what shown in figure 2, the separable/joinable several times connecting device 29 preferably comprises a body 32 which supports the adhesive surface 10, and a body 33 which supports the adhesive surface 11 and is connected to the body 32 in such a way to be separable/joinable several times, so that every time you want to separate the built-in refrigerator 2 from the furniture 3 (i.e. you want to separate the lateral wall 9 of the built-in refrigerator 2 from the lateral wall 4 of the furniture 3) you just need to separate the two bodies 32 and 33, for example by inserting a thin tool between the bodies 32 and 33 of the connecting device 29 so that the thin tool act as a lever for applying a separating force to the bodies 32 and 33.

According to what shown in figures 3 and 4, the separable/joinable several times connection device 30 preferably comprises a body 34 which supports the adhesive surface 13 and a body 35 which supports the adhesive surface 14 and is connected to the body 34 in such a way to be separable/joinable several times, so that whenever you want to separate the built-in refrigerator 2 from the furniture 3 (i.e. you want to separate the lateral wall 12 of the built-in refrigerator 2 from the lateral wall 5 of the furniture 3) you just need to separate the two bodies 34 and 35, for example by inserting a thin tool between the bodies 34 and 35 of the connecting device 30 so that the thin tool act as a lever for applying a separating force to the bodies 34 and 35.

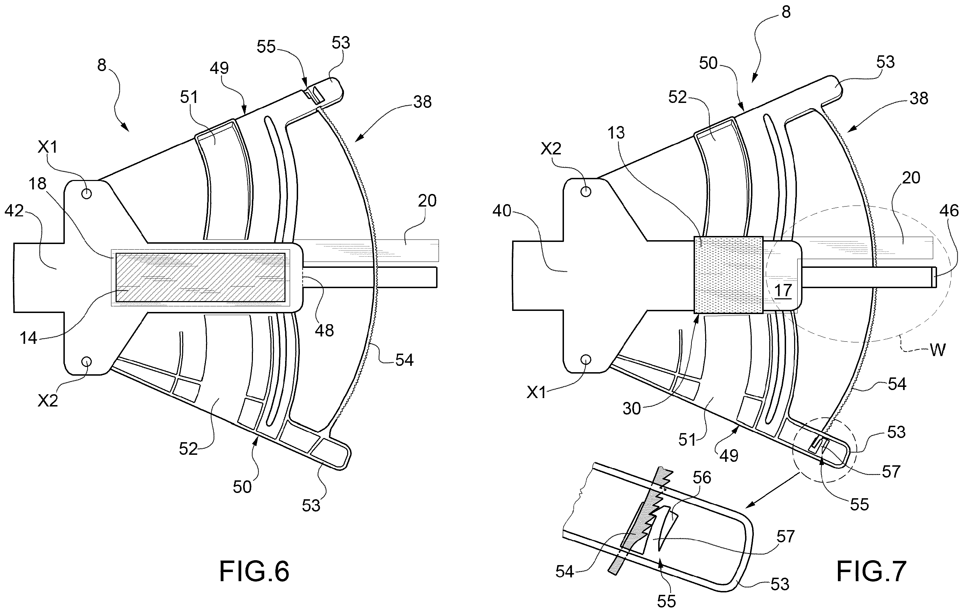

Preferably, the separable/joinable several times connection device 30 of the fixing element 8 of the embodiment illustrated in figures 6 and 7 has the same structure.

According to what shown in figures 10 and 11, the separable/joinable several times device 31 preferably comprises a body 36 which supports the adhesive surface 25 and a body 37 which supports the adhesive surface 26 and is connected to the body 36 in such a way to be separable/joinable several times, so that whenever you want to separate the guide profile 22 from the door 6 of the furniture 3 (or if you want to separate the door 21 of the built-in refrigerator 2 from the door 6 of the piece of furniture 3) you just need to separate the two bodies 36 and 37 between them, for example by inserting a thin tool between the bodies 36 and 37 of the connecting device 31 so that the thin tool act as a lever for applying a separating force to the bodies 36 and 37.

In detail, in the embodiment illustrated in the attached figures, the connecting devices 29, 30 and 31 use a closing system with micro-slots and micro-hooks to keep the respective bodies 32-37 joined together (i.e. in a body 32-37 are present a plurality of micro-slots while in the other body 32-37 there are a plurality of micro-hooks, which couple mechanically and separably with respective micro-slots).

In particular, the bodies 32-37 of the connecting devices 29, 30 and 31 may be made of fabric of polymeric material, or of natural fibres.

For example, according to a variant not shown, the body 32, the body 34 and the body 36 could be made by intertwining the constituent fabric so as to define a first weft, while the body 33, the body 35 and the body 37 could be made by intertwining the same fabric according to a second weft, which is different from the first weft and is configured so as to be suitable to be coupled and decoupled with the first weft several times, so as to be suitable to easily separate/join several times the bodies 32 and 33, 34 and 35, 36 and 37 among them.

According to a further embodiment, not shown, the bodies of the connecting devices 29, 30 and 31 can be made of a non-woven fabric, for example made of polymeric material or alternatively natural fibres, configured to be separable and joinable several times. According to a variant of said embodiment, the bodies 32 and 33 of the connecting device 29, the bodies 34 and 35 of the connecting device 30 and the bodies 36 and 37 of the connecting device 31 could be made in such a way as to form a single a layer made, for example, of non-woven fabric, or fabric, which can be separated and reattached several times.

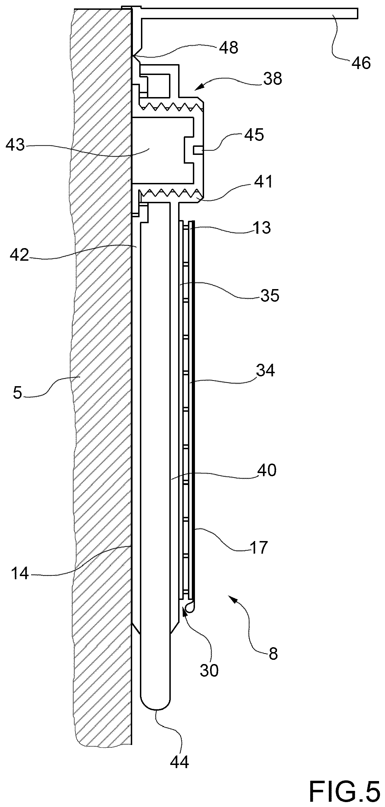

According to what shown in figures 5, 6, 7, 9A, 9B e 9C, the fixing element 8 further comprises a spacer assembly 38 which is interposed between the adhesive surface 13 and the adhesive surface 14 and which has an adjustable thickness to vary the distance between the adhesive surfaces 13 and 14.

The spacer assembly 38 allows the adhesive surfaces 13 and 14 to be moved apart or brought together so as to compensate any small differences in width between the furniture 3 and the built-in refrigerator 2 and so as that the fixing element 8 have a thickness greater than the hinges 39 (partially shown in Figure 1), arranged on the lateral wall 5 of the furniture 3 (i.e. the hinges 39 by means of which the door 6 of the furniture 3 is connected to the lateral wall 5) in order to ensure that once the built-in refrigerator 2 is inserted in the furniture 3, the built-in refrigerator 2 comes into contact with the removable protective film 17 or, after the removable protective film 17 has been removed, with the adhesive surface 13. Indeed, if this were not the case, the fixing between the built-in refrigerator 2 and the furniture 3 could be compromised.

Particularly, according to a first embodiment of the fixing element 8 illustrated in figures 3, 4 and 5, the spacer assembly 38 comprises an inner plate 40, which is connected to the adhesive surface 13 (by means of the interposing of the connecting device 30) and carries a cylindrical seat 41, and an outer plate 42, which is connected to the adhesive surface 14 and carries an adjustment element 43 which is rotatably mounted on the outer plate 42. The inner plate 40 and the outer plate 42 are arranged in such a way that the cylindrical seat 41 rotatably receives the adjustment element 43 so that by rotating the adjustment element 43 inside the cylindrical seat 41 it is possible to vary the distance between the two plates 40 and 42.

In detail, the spacer assembly 38 shown in figure 5 has a threaded cylindrical seat 41 and a threaded adjusting element 43 screwed into the cylindrical seat 41 so that by screwing or unscrewing the adjustment element 43 with respect to the cylindrical seat 41 there is a forward or a retraction of the adjustment element 43, and therefore of the external plate 42 to which said adjustment element 43 is connected, with respect to the internal plate 40.

Moreover, as shown in figure 5, preferably the two plates 40 and 42 are connected to each other by means of an "U" shaped flexible connecting element 44. This flexible connecting element 44 serves to keep the two plates 40 and 42 constrained to each other, so that in the case that the adjusting element 43 is rotated too much until to cause, unintentionally, the decouple of the adjusting element 43 with respect to the cylindrical seat 41, the plates 40 and 42 remain bound to each other.

Furthermore, again with particular reference to figure 5, the adjustment element 43 preferably has a maneuvering portion 45 (typically provided with a slit wide enough to be engaged also by a coin) for screwing and unscrewing the adjustment element 43. Preferably, this maneuvering portion 45 is arranged to be accessible even when the fixing element 8 is fixed to the lateral wall 5 of the furniture 3.

According to a non-illustrated embodiment of the spacer assembly 38, the cylindrical seat 41 could solidaly constrained to the outer plate 42 and the adjusting element 43 could be mounted rotatable to the inner plate 40.

Alternately, according to a second embodiment of the fixing element 8 shown in figures 6, 7, 9A, 9B and 9C, the spacer assembly 38 comprises an inner plate 40, which is connected to the adhesive surface 13 (by means of the interposing of the connecting device 30), and an outer plate 42, which is connected to the adhesive surface 14, is parallel and opposed to the inner plate 40 and is arranged at a determined distance from the inner plate 40.

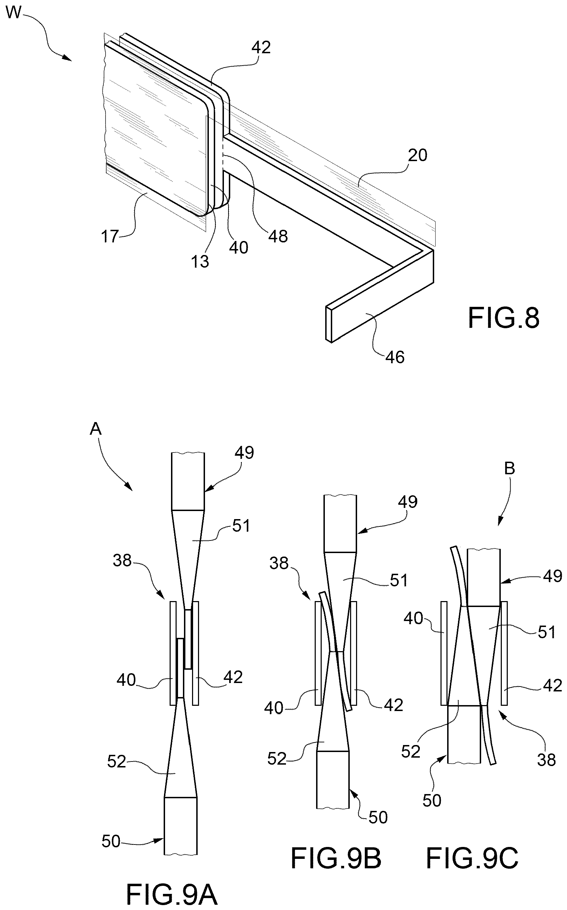

The spacer assembly 38 illustrated in figures 6 and 7 further comprises two adjustment elements 49 and 50, which are interposed between the inner plate 40 and the outer plate 42, in particular they are arranged to define the aforementioned determined distance between the plates 40, 42. The adjustment elements 49 and 50 are connected to the plates 40 and 42 and are designed to be movable with respect to each other between an initial position A illustrated in figures 6 and 7, wherein the plates 40 and 42 assume the minimum mutual distance (see figure 9A) and a final position B, where the plates 40 and 42 assume the maximum mutual distance (see figure 9C).

The adjustment elements 49 and 50 further comprise a respective coupling portion 51 and 52. The coupling portions 51 and 52 are arranged and shaped to overlap at least partially with each other, when the adjustment elements 49 and 50 move from the initial position A to the final position B, so as to increase the distance between the two plates 40, 42 (compare figures 9A, 9B and 9C). For example, the coupling portions 51 and 52 illustrated in figures 6 and 7 are at least partially relief, i.e. they have at least the edges protruding towards the inner plate 40 and towards the outer plate 42, in such a way that their overlap determines an increase in thickness of the spacer assembly 38 and therefore an increase of the distance between the plates 40 and 42.

It is clear that the coupling portions 51 and 52 can have any other shape adapted to vary the thickness of the spacer assembly 38 (and thus the distance between the plates 40 and 42) by varying the coupling of the coupling portions 51 and 52.

Preferably, in accordance with the embodiment shown in figures 6 and 7, the adjustment elements 49 and 50 are shaped like a circular sector and are rotatably mounted with respect to each other so as to move from the initial position A, wherein the adjustment elements 49 and 50 are substantially aligned and side by side with each other, to the final position B, wherein the adjustment elements 49 and 50 are arranged at an angle to each other so as to at least partially overlap to each other. In particular, each adjustment element 49 and 50 is rotatably mounted around a respective rotation pin X1 and X2. Preferably, the rotation pins X1 and X2 serve, at the same time, as a rotation fulcrum for the respective adjustment element 49 and 50 and as a constraint between the plates 40 and 42 and the respective adjustment element 49 and 50.

The adjustment elements 49 and 50 further comprise gripping means 53 which extend beyond the inner plate 40 and the outer plate 42 to project, in use (i.e. when the built-in refrigerator 2 is inserted inside the furniture 3), outside the second wall 12 of the built-in refrigerator 2.

In the example illustrated in figures 6 and 7 the gripping means 53 comprise two arms 53 one for each adjustment elements 49 and 50. The arms 53 of the adjustment elements 49 and 50 are adapted to be grasped to rotate the adjustment elements 49 and 50 to each other from the initial position A to the final position B, and vice versa so as to vary the distance between the plates 40 and 42, increasing or decreasing the mutual superposition between the elements of adjustment 49 and 50 (more particularly between the coupling portions 51 and 52).

According to what is illustrated in figures 6 and 7, the spacer assembly 38 further comprises a cable tie 54 which has at least one toothed surface.

In particular, the cable tie 54 is fixed to (i.e. it is carried by) one of the two arms 53 and it extends until to the other of the two arms 53 (crossing it and) defining an arch which protrudes, in use, outside the second wall 12 of the built-in refrigerator 2, so that when the built-in refrigerator 2 is inserted inside the furniture 3, the cable tie 54 (as well as the arms 53) can be grasped to move (i.e. to rotate) the adjustment elements 49 and 50 relative to each other.

The spacer assembly 38 further comprises securing means 55 designed to prevent the movement of the adjustment elements 49 and 50 with respect to each other, once a desired position (i.e. a desired distance between the plates 40 and 42) has been reached.

For example, in the attached figures, the cable tie 54 is integral with one of the two arms 53 and is configured to cross a slot 56 provided in the other of the two arms 53. Preferably, the securing means 55 comprise a securing tooth 57 arranged at the slot 56 and designed to engage the toothed surface of the cable tie 54 to retain the cable tie 54 and block it (see the enlarged detail of figure 7) so as to prevent the movement of the cable tie 54 through the slot 56 once the desired position has been reached, unless a force higher than the securing force exerted by the securing means 55 is applied, for example, by pulling the cable tie 54.

In order to facilitate the correct arrangement of the fixing element 8, the fixing element 8 shown in figure 3, 4 5, 6, 7 and 8, preferably comprises a removable reference plate 46 which extends in a direction orthogonal to the adhesive surfaces 13 and 14 to abut against an inner edge 47 (shown in Figure 1) of the door 6 of the furniture 3 when the fixing element 8 is resting against the lateral wall 5 of the piece of furniture 3. Preferably, the removable reference plate 46 is connected to the fixing element 8 by interposition of a weakening portion 48, so as to facilitate the removal of the reference plate 46, once the fixation device 8 has been fixed to the lateral wall 5 of the furniture 3 by means of the adhesive surface 14.

With particular reference to figures from 10 to 16, a method for fixing the built-in refrigerator 2 in the furniture 3 which can be implemented using the above described fixing system 1 is described.

As shown in figure 10, initially the built-in refrigerator 2 is outside the furniture 3 and the three fixing elements 7, 8 and 23 are apart from the built-in refrigerator 2 and from the furniture 3.

Initially, the installer removes the removable protective film 16 from the adhesive surface 11 of the fixing element 7 and then glues the adhesive surface 11 to the lateral wall 4 of the furniture 3 to firmly connect the fixing element 7 to the lateral wall 4 of the furniture 3 in a position such as to ensure that the preferred graspable removal flap 19 will protrude with respect to the lateral wall 9 of the built-in refrigerator 2 (when the built-in refrigerator 2 will be positioned inside the furniture 3).

Subsequently, or even previously, the installer removes the removable protective film 18 from the adhesive surface 14 of the fixing element 8 and then glues the adhesive surface 14 to the lateral wall 5 of the furniture 3 to firmly connect the fixing element 8 to the lateral wall 5 of the furniture 3 in a position such as to ensure that the preferred graspable removal flap 20 will protrude with respect to the lateral wall 12 of the built-in refrigerator 2 (when the built-in refrigerator 2 will be positioned inside the furniture 3). Preferably, in order to correctly arrange the fixing element 8 shown in figures 3, 4 and 5 to the lateral wall 5 of the furniture 3, the installer, before gluing the adhesive surface 14 to the lateral wall 5 of the furniture 3, arranges the fixing element 8 so that the removable reference plate 46 abut against the inner edge 47 of the door 6 of the furniture 3. After the adhesive surface 14 has been glued to the lateral wall 5 of the furniture 3, then the installer breaks and removes the removable reference plate 46.

At this point, the installer adjusts, if necessary, the thickness of the fixing element 8, for example acting on the adjustment element 43, when the fixing element 8 is realized according to the above described first embodiment (see figures 3, and 5), or acting on the adjustment elements 49, 50, when the fixing element 8 is realized according to the above described second embodiment (see figures 6 and 7). The adjustment of the thickness of the fixing element 8 has the purpose of ensuring that, once the built-in refrigerator 2 has been inserted in the furniture 3, the lateral wall 9 of the built-in refrigerator 2 is in contact with the adhesive surface 10 of the fixing element 7 and that the lateral wall 12 of the built-in refrigerator 2 is in contact with the adhesive surface 13 of the fixing element 8.

In detail, if the fixing element 8 is realized as shown in figures 3, 4 and 5, once the fixing element 7 has been fixed to the lateral wall 4 of the furniture 3 and the fixing element 8 has been fixed to the lateral wall 5 of the furniture 3, the adjustment element 43 is rotated, for example by means of a normal screwdriver or even by a coin , until the adhesive surfaces 10 and 13, still covered by the respective protective films 15 and 17, do not lie between them at a distance which is substantially equal to the distance between the walls 9 and 12 of the built-in refrigerator 2.In the same way, if the fixing element 8 is realized as shown in figures 6, 7, 8, 9A, 9B and 9C, once the fixing element 7 has been fixed to the lateral wall 4 of the furniture 3 and the fixing element 8 has been fixed to the lateral wall 5 of the furniture 3, the adjustment elements 49 and 50 are moved, preferably are rotated, to each other, for example acting on the arms 53 and pulling the cable tie 54, until the adhesive surfaces 10 and 13, still covered by the respective protective films 15 and 17, do not lie between them at a distance which is substantially equal to the distance between the walls 9 and 12 of the built-in refrigerator 2.

Once the thickness of the fixing element 8 has been preferably adjusted, the installer inserts the built-in refrigerator 2 into the furniture 3, leaving the protection films 15 and 17 in position and then making slide the walls 9 and 12 between the films 15 and 17 of protection.

Alternatively, the adjustment of the thickness of the fixing element 8 may be performed immediately after the installer inserts the built-in refrigerator 2 into the furniture 3, leaving the protection films 15 and 17 in position.

Once the refrigerator 2 has been correctly inserted in the furniture 3, the installer removes the removable protective film 15, preferably through the graspable removal flap 19, to glue the adhesive surface 10 of the fixing element 7 to the lateral wall 9 of the built-in refrigerator 2 and removes (subsequently or formerly) the removable protective film 17, preferably by means of the graspable removal flap 20, to glue the adhesive surface 13 of the fixing element 8 to the lateral wall 12 of the built-in refrigerator 2.

When the door 21 of the built-in refrigerator 2 must also be fixed to the door 6 of the furniture 3, the installer must initially glue the adhesive surface 26 of the fixing element 23 to the guide profile 22, after removing the removable protective film 28 (obviously, if the fixing element 23 is already pre-glued to the guide profile 22, this operation is not necessary). Subsequently, the installer preferably fixes the sled 24 to the door 21 of the built-in refrigerator 2 (typically by means of a screw fixing system of known type); alternatively, the sled 24 could be already pre-mounted on the door 21 of the built-in refrigerator 2. At this point, the installer couples the guide profile 22 (which is preferably glued to the fixing element 23 and is still separated from the door 6 of the furniture 3) to the sled 24. Finally, the installer removes the protective film 27 from the adhesive surface 25 and he glues the adhesive surface 25 of the fixing element 23 to the door 6 of the furniture 3; this operation is performed extremely easily and quickly, by simply closing the door 6 of the furniture 3 and pressing on the door 6 so that the door 6 sticks to the adhesive surface 25 of the fixing element 23.

According to a possible embodiment, the guide profile 22 has a "*disposable*" support system which keeps the guide profile 22 in the correct position after the guide profile 22 has been mounted on the sled 24 and before the door 6 of the furniture 3 is closed against the guide profile 22 to glue the adhesive surface 25 of the fixing element 23 to the door 6.

According to a further not shown embodiment, any one or all of the separable connecting devices 29, 30 and 31 are not present; in this case, to separate the built-in refrigerator 2 from the furniture 3 to which the built-in refrigerator 2 is fixed is necessary to brake (cut) the fixing elements 7, 8 and 23 and to use new fixing elements 7, 8 and 23 to subsequent newly insert the built-in refrigerator 2 into the furniture 3.

In the embodiment shown in the attached figures, only the removable protective films 15 and 17 are provided with the graspable removal flaps 19 and 20; according to other embodiments not shown, the protective films 16 and 18 are provided with respective graspable removal flaps in addition or in alternative to the graspable removal flaps 19 and 20 of the removable protective films 15 and 17 (in this case, the fixing elements 7 and 8 could be glued firstly to the built-in refrigerator 2 and then to the furniture 3 instead of being glued firstly to the furniture 3 and then to the built-in refrigerator 2).

In the embodiment shown in the attached figures, the built-in domestic appliance 2 which is mounted inside the furniture 3 is a refrigerator; according to other embodiments not illustrated, the built-in domestic appliance 2 which is mounted inside the furniture 3 is for example an oven, a dishwasher, or a washing machine.

The fixing system 1 described above has numerous advantages.

Firstly, the fixing system 1 described above allows the assembly and possible subsequent disassembly of the built-in refrigerator 2 into the furniture 3 in a quickly and easy manner (even without using any tool like a screwdriver). Advantageously, the fixing method described above can be easily performed even by an unskilled user.

Likewise, even the separation of a built-in refrigerator 2 from a furniture 3, after they have been fixed with the fixing system 1 described above, will be much simpler and, therefore, easily performable even by an unskilled user. Indeed, thanks to the presence of separable connecting devices 29, 30 and 31, each time it is desired to separate the built-in refrigerator 2 from the furniture 3 to which the built-in refrigerator 2 is fixed, it just need to separate the separable connecting devices 29, 30 and 31.

Finally, the fixing system 1 described above is easy and inexpensive to manufacture.

### LIST OF REFERENCE NUMBERS OF FIGURES

- 1: fixing system
- 2: refrigerator
- 3: furniture
- 4: lateral wall of the furniture
- 5: lateral wall of the furniture
- 6: door of the furniture
- 7: fixing element
- 8: fixing element
- 9: lateral wall of the refrigerator
- 10: adhesive surfaces
- 11: adhesive surfaces
- 12: lateral wall of the refrigerator
- 13: adhesive surfaces
- 14: adhesive surfaces
- 15: removable protective film
- 16: removable protective film
- 17: removable protective film
- 18: removable protective film
- 19: graspable removal flap
- 20: graspable removal flap
- 21: door of the refrigerator
- 22: guide profile
- 23: fixing element
- 24: sled
- 25: adhesive surfaces
- 26: adhesive surfaces
- 27: removable protective film
- 28: removable protective film
- 29: connecting device
- 30: connecting device
- 31: connecting device
- 32: body
- 33: body
- 34: body
- 35: body
- 36: body
- 37: body
- 38: spacer group
- 39: hinges
- 40: inner plate
- 41: cylindrical seat
- 42: outer plate
- 43: adjustment element
- 44: flexible connecting element
- 45: maneuvering portion
- 46: removable reference plate
- 47: inner edge
- 48: weakening portion
- 49: first adjustment element
- 50: second adjustment element
- 51: first coupling portion
- 52: second coupling portion
- 53: gripping means/arm
- 54: cable tie
- 55: securing means
- 56: slot
- 57: securing tooth

## Claims

1. Fixing system (1) for a built-in domestic appliance (2) inside a furniture (3) which has a first lateral wall (4) and a second lateral wall (5) parallel to each other and a door (6) hinged to the second lateral wall (5); the fixing system (1) includes:
a first fixing element (7) comprising a first adhesive surface (10) suitable to be glued to a first lateral wall (9) of the built-in domestic appliance (2), a second adhesive surface (11) parallel and opposite to the first surface adhesive (10) and suitable to be glued to the first lateral wall (4) of the furniture (3), a first removable protective film (15) which initially covers the first adhesive surface (10), and a second removable protective film (16) which initially covers the second adhesive surface (11); and
a second fixing element (8) comprising a third adhesive surface (13) suitable to be glued to a second lateral wall (12) of the built-in domestic appliance (2) and a fourth adhesive surface (14) parallel and opposite to the third adhesive surface (13) and suitable to be glued to the second lateral wall (5) of the furniture (3), a third removable protective film (17) which initially covers the third adhesive surface (13), and a fourth removable protective film (18) which initially covers the fourth adhesive surface (14) **characterized in that** the second fixing element (8) comprises a spacer group (38) which is interposed between the third adhesive surface (13) and the fourth adhesive surface (14) and has an adjustable thickness to vary the distance between the third adhesive surface (13) and the fourth adhesive surface (14).

2. Fixing system (1) according to the previous claim, wherein:
the first removable protective film (15) and/or the second removable protective film (16) has a first graspable removal flap (19) which extends beyond the first adhesive surface (10) and/or the second adhesive surface (11) to protrude outside the first lateral wall (9) of the built-in domestic appliance (2) when the built-in domestic appliance (2) is inserted inside the furniture (3); and
the third removable protective film (17) and/or the fourth removable protective film (18) has a second graspable removal flap (20) which extends beyond the third adhesive surface (13) and/or the fourth adhesive surface (14) to protrude outside the second lateral wall (12) of the built-in domestic appliance (2) when the built-in domestic appliance (2) is inserted inside the furniture (3).

3. Fixing system (1) according to any of previous claims, wherein:
the first fixing element (7) comprises a first separable/joinable several times connecting device (29) which is interposed between the first adhesive surface (10) and the second adhesive surface (11); and/or
the second fixing element (8) comprises a second separable/joinable several times connecting device (30) which is interposed between the third adhesive surface (13) and the fourth adhesive surface (14).

4. Fixing system (1) according to the previous claim, wherein:
the first separable/joinable several times connecting device (29) comprises a first body (32) which supports the first adhesive surface (10) and a second body (33) which supports the second adhesive surface (11) and is connected to the first body (32) in such a way to be separable/joinable several times; and/or
the second separable/joinable several times connecting device (30) comprises a third body (34) which supports the third adhesive surface (13) and a fourth body (35) which supports the fourth adhesive surface (14) and is connected to the third body (34) in such a way to be separable/joinable several times.

5. Fixing system (1) according to the claim 3 or 4, wherein each separable connecting device (29, 30) uses a closure system with micro-slots and micro-hooks.

6. Fixing system (1) according to the claim any one of claims 1 - 5, wherein the spacer group (38) comprises:
an inner plate (40) which is connected to the third adhesive surface (13);
an outer plate (42) which is connected to the fourth adhesive surface (14);
a cylindrical seat (41) solidally constrained to the inner plate (40) or the external plate (42); and
an adjustment element (43) which is inserted in the cylindrical seat (41), is rotatably mounted to the outer plate (42) or to the inner plate (40), and is adapted to be rotated relative to the cylindrical seat (41) to vary the distance between the two plates (40, 42).

7. Fixing system (1) according to the claim 6, wherein the cylindrical seat (41) is threaded and the adjustment element (43) is threaded and screwed into the cylindrical seat (41).

8. Fixing system (1) according to the claim 6 or 7, the two plates (40, 42) are connected to each other by means of an "U" shaped flexible connecting element (44).

9. Fixing system (1) according to any one of claims 1 - 5, wherein the spacer group (38) comprises:
an inner plate (40) which is connected to the third adhesive surface (13);
an outer plate (42) which is connected to the fourth adhesive surface (14);
a first adjustment element (49) and a second adjustment element (50), which are interposed between the inner plate (40) and the outer plate (42), are connected to the inner plate (40) and to the outer plate (42), and are designed to be movable with respect to each other between an initial position (A), wherein the distance between the two plates (40, 42) is minimal, and a final position (B), wherein the distance between the two plates (40, 42) is maximum.

10. Fixing system (1) according to the claim 9, wherein:
the first adjustment element (49) comprises a first coupling portion (51); the second adjustment element (50) comprises a second coupling portion (52); and the first coupling portion (51) and the second coupling portion (52) are arranged and shaped to overlap, at least partially, with each other, when the first adjustment element (49) and the second adjustment element (50) move from the initial position (A) to the final position (B), so as to increase the distance between the two plates (40, 42).

11. Fixing system (1) according to claim 9 or 10, wherein:
the first adjustment element (49) and the second adjustment element (50) are rotatable to each other and comprise gripping means (53), which are adapted to be grasped to rotate the first adjustment element (49) and the second adjustment element (50) with respect to each other and extend beyond the inner plate (40) and the outer plate (42) to protrude outside the second lateral wall (12) of the built-in domestic appliance (2), when the built-in domestic appliance (2) is inserted inside the furniture (3);
the spacer assembly (38) comprises securing means (55) to prevent the rotation of the first adjustment element (49) and the second adjustment element (50) with respect to each other, once a desired position has been reached.

12. Fixing system (1) according to any one of claims from 7 to 11, wherein the second fixing element (8) comprises a removable reference plate (46) which extends in a direction orthogonal to the third and fourth adhesive surfaces (13, 14) to abut against an inner edge (47) of the door (6) of the furniture (3) when the second fixing element (8) is resting on the second lateral wall (5) of the furniture (3) so as to allow correct arrangement of the second fixing element (8).

13. Fixing system (1) according to any one of the previous claims and comprising:
a guide profile (22);
a third fixing element (23) comprising a fifth adhesive surface (25) suitable to be glued to the door (6) of the furniture (3), a sixth adhesive surface (26) parallel and
opposite to the fifth adhesive surface (25) and suitable to be glued to the guide profile (22), and a fifth removable protective film (27) which initially covers the fifth adhesive surface (25); and
a sled (24) which can be fixed to a door (21) of the built-in domestic appliance (2) and shaped to can slidably be coupled to the guide profile (22).

14. Fixing system (1) according to claim 13 wherein the third fixing element (23) comprises a third separable/joinable several times connecting device (31) which is interposed between the fifth adhesive surface (25) and the sixth adhesive surface (6).

15. Fixing system (1) according to claim 14, wherein the third separable/joinable several times connecting device (31) comprises a fifth body (36) which supports the fifth adhesive surface (25) and a sixth body (37) which supports the sixth adhesive surface (26) and is connected to the fifth body (36) in such a way to be separable/joinable several times.

16. Method for fixing a built-in domestic appliance (2) to a furniture (3) using the fixing system (1) according to any one of the previous claims; the method for fixing includes the step of:
gluing the second adhesive surface (11) of the first fixing element (7) to the first lateral wall (4) of the furniture (3), by first removing the second protective film (16);
gluing the fourth adhesive surface (14) of the second fixing element (8) to the second lateral wall (5) of the furniture (3), by first removing the fourth protective film (18) ;
inserting the built-in domestic appliance (2) into the furniture (3), leaving in position the first removable protective film (15) and the third protective film (17);
removing the first removable protective film (15) to glue the first adhesive surface (10) of the first fixing element (7) to the first lateral wall (9) of the built-in domestic appliance (2); and
removing the third removable protective film (17) to glue the third adhesive surface (13) of the second fixing element (8) to the second lateral wall (12) of the built-in domestic appliance (2).

17. Method for fixing a built-in domestic appliance (2) according to claim 16 comprising, after gluing the fourth adhesive surface (14) of the second fixing element (8) to the second lateral wall (5) of the furniture and before inserting the built-in domestic appliance (2) into the furniture (3), the further step of adjusting the thickness of the spacer group (38) so that, once the built-in domestic appliance (2) has been inserted into the furniture (3), the first lateral wall (9) of the built-in domestic appliance (2) to be contact with the first adhesive surface (10) and the second lateral wall (12) of the built-in appliance (2) to be in contact with the third adhesive surface (13).

18. Method for fixing a built-in domestic appliance (2) to a furniture (3)according to claim 17; the fixing method includes the step of:
gluing a sixth adhesive surface (26) to a guide profile (22) ;
fixing a sled (24) to a door (21) of the built-in domestic appliance (2);
coupling the sled (24) with the guide profile (22) before or after having fixed the sled (24) to the door (21) of the built-in domestic appliance (2); and
gluing a fifth adhesive surface (25) to the door (6) of the furniture (3), by first removing a fifth removable protective film (27) and by closing the door (6) of the furniture (3) towards the door (21) of the built-in domestic appliance (2) supporting the sled (24) and the guide profile (22).

19. A furniture (3) comprising a fixing system (1) according to any one of claims 1-15 and a built-in domestic appliance (2) inside the furniture (3) which has a first lateral wall (4) and a second lateral wall (5) parallel to each other and a door (6) hinged to the second lateral wall (5).

## Patentansprüche

1. Befestigungssystem (1) für ein eingebautes Haushaltsgerät (2) in einem Möbel (3), das eine erste Seitenwand (4) und eine zweite Seitenwand (5), die parallel zueinander sind, und eine Tür (6) aufweist, die an der zweiten Seitenwand (5) scharniermäßig befestigt ist, wobei das Befestigungssystem (1) Folgendes aufweist:
ein erstes Befestigungselement (7), das eine erste Klebefläche (10), die zum Kleben an einer ersten Seitenwand (9) des eingebauten Haushaltsgeräts (2) geeignet ist, eine zweite Klebefläche (11), die parallel zu der ersten Klebefläche (10) verläuft und dieser gegenüberliegt und zum Kleben an der ersten Seitenwand (4) des Möbels (3) geeignet ist, eine erste entfernbare Schutzfolie (15), die anfänglich die erste Klebefläche (10) bedeckt, und eine zweite entfernbare Schutzfolie (16), die anfänglich die zweite Klebefläche (11) bedeckt, aufweist, und
ein zweites Befestigungselement (8), das eine dritte Klebefläche (13), die zum Kleben an einer zweiten Seitenwand (12) des eingebauten Haushaltsgeräts (2) geeignet ist, und eine vierte Klebefläche (14), die parallel zu der dritten Klebefläche (13) verläuft und dieser gegenüberliegt und zum Kleben an der zweiten Seitenwand (5) des Möbels (3) geeignet ist, eine dritte entfernbare Schutzfolie (17), die anfänglich die dritte Klebefläche (13) bedeckt, und eine vierte entfernbare Schutzfolie (18), die anfänglich die vierte Klebefläche (14) bedeckt, aufweist, **dadurch gekennzeichnet, dass** das zweite Befestigungselement (8) eine Abstandhaltergruppe (38) umfasst, die zwischen der dritten Klebefläche (13) und der vierten Klebefläche (14) liegt und eine verstellbare Dicke aufweist, um den Abstand zwischen der dritten Klebefläche (13) und der vierten Klebefläche (14) zu variieren.

2. Befestigungssystem (1) nach dem vorhergehenden Anspruch, wobei:
die erste entfernbare Schutzfolie (15) und/oder die zweite entfernbare Schutzfolie (16) eine erste ergreifbare Abziehlasche (19) aufweisen, die sich über die erste Klebefläche (10) und/oder die zweite Klebefläche (11) hinaus erstrecken, um außerhalb der ersten Seitenwand (9) des eingebauten Haushaltsgeräts (2) vorzuragen, wenn das eingebaute Haushaltsgerät (2) in das Möbel (3) eingeführt ist, und
die dritte entfernbare Schutzfolie (17) und/oder die vierte entfernbare Schutzfolie (18) eine zweite ergreifbare Abziehlasche (20) aufweisen, die sich über die dritte Klebefläche (13) und/oder die vierte Klebefläche (14) hinaus erstrecken, um außerhalb der zweiten Seitenwand (12) des eingebauten Haushaltsgeräts (2) vorzuragen, wenn das eingebaute Haushaltsgerät (2) in das Möbel (3) eingeführt ist.

3. Befestigungssystem (1) nach einem der vorhergehenden Ansprüche, wobei:
das erste Befestigungselement (7) eine erste mehrfach trennbare/verbindbare Verbindungsvorrichtung (29) umfasst, die zwischen der ersten Klebefläche (10) und der zweiten Klebefläche (11) liegt, und/oder
das zweite Befestigungselement (8) eine zweite mehrfach trennbare/verbindbare Verbindungsvorrichtung (30) umfasst, die zwischen der dritten Klebefläche (13) und der vierten Klebefläche (14) liegt.

4. Befestigungssystem (1) nach dem vorhergehenden Anspruch, wobei:
die erste mehrfach trennbare/verbindbare Verbindungsvorrichtung (29) einen ersten Körper (32), der die erste Klebefläche (10) stützt, und einen zweiten Körper (33) umfasst, der die zweite Klebefläche (11) stützt und so mit dem ersten Körper (32) verbunden ist, dass er mehrfach trennbar/verbindbar ist, und/oder
die zweite mehrfach trennbare/verbindbare Verbindungsvorrichtung (30) einen dritten Körper (34), der die dritte Klebefläche (13) stützt, und einen vierten Körper (35) umfasst, der die vierte Klebefläche (14) stützt und so mit dem dritten Körper (34) verbunden ist, dass er mehrfach trennbar/verbindbar ist.

5. Befestigungssystem (1) nach dem Anspruch 3 oder 4, wobei jede trennbare Verbindungsvorrichtung (29, 30) ein Verschlusssystem mit Mikroschlitzen und Mikrohaken verwendet.

6. Befestigungssystem (1) nach einem der Ansprüche 1 - 5, wobei die Abstandhaltergruppe (38) Folgendes umfasst:
eine innere Platte (40), die mit der dritten Klebefläche (13) verbunden ist,
eine äußere Platte (42), die mit der vierten Klebefläche (14) verbunden ist,
einen zylindrischen Sitz (41), der fest mit der inneren Platte (40) oder der äußeren Platte (42) verbunden ist, und
ein in den zylindrischen Sitz (41) eingeführtes Verstellelement (43), das drehbar an der äußeren Platte (42) oder an der inneren Platte (40) montiert und dazu ausgeführt ist, bezüglich des zylindrischen Sitzes (41) gedreht zu werden, um den Abstand zwischen den beiden Platten (40, 42) zu variieren.

7. Befestigungssystem (1) nach Anspruch 6, wobei der zylindrische Sitz (41) mit einem Gewinde versehen ist und das Verstellelement (43) mit einem Gewinde versehen und in den zylindrischen Sitz (41) eingeschraubt ist.

8. Befestigungssystem (1) nach Anspruch 6 oder 7, wobei die beiden Platten (40, 42) durch ein U-förmiges flexibles Verbindungselement (44) miteinander verbunden sind.

9. Befestigungssystem (1) nach einem der Ansprüche 1 - 5, wobei die Abstandhaltergruppe (38) Folgendes umfasst:
eine innere Platte (40), die mit der dritten Klebefläche (13) verbunden ist,
eine äußere Platte (42), die mit der vierten Klebefläche (14) verbunden ist,
ein erstes Verstellelement (49) und ein zweites Verstellelement (50), die zwischen der inneren Platte (40) und der äußeren Platte (42) angeordnet, mit der inneren Platte (40) und der äußeren Platte (42) verbunden und so ausgelegt sind, dass sie bezüglich einander zwischen einer Ausgangsposition (A), in der der Abstand zwischen den beiden Platten (40, 42) minimal ist, und einer Endposition (B), in der der Abstand zwischen den beiden Platten (40, 42) maximal ist, beweglich sind.

10. Befestigungssystem (1) nach Anspruch 9, wobei:
das erste Verstellelement (49) einen ersten Kupplungsabschnitt (51) umfasst, das zweite Verstellelement (50) einen zweiten Kupplungsabschnitt (52) umfasst, und der erste Kupplungsabschnitt (51) und der zweite Kupplungsabschnitt (52) so angeordnet und geformt sind, dass sie sich mindestens teilweise überlappen, wenn sich das erste Verstellelement (49) und das zweite Verstellelement (50) aus der Ausgangsposition (A) in die Endposition (B) bewegen, um den Abstand zwischen den beiden Platten (40, 42) zu vergrößern.

11. Befestigungssystem (1) nach Anspruch 9 oder 10, wobei:
das erste Verstellelement (49) und das zweite Verstellelement (50) zueinander drehbar sind und Greifmittel (53) umfassen, die zum Greifen ausgelegt sind, um das erste Verstellelement (49) und das zweite Verstellelement (50) bezüglich einander zu drehen, und sich über die innere Platte (40) und die äußere Platte (42) hinaus erstrecken, um außerhalb der zweiten Seitenwand (12) des eingebauten Haushaltsgeräts (2) vorzuragen, wenn das eingebaute Haushaltsgerät (2) in das Möbel (3) eingeführt ist,
die Abstandhalterbaugruppe (38) Befestigungsmittel (55) umfasst, um die Drehung des ersten Verstellelements (49) und des zweiten Verstellelements (50) bezüglich einander zu verhindern, sobald eine gewünschte Position erreicht ist.

12. Befestigungssystem (1) nach einem der Ansprüche 7 bis 11, wobei das zweite Befestigungselement (8) eine entfernbare Referenzplatte (46) umfasst, die sich in einer orthogonal zu der dritten und vierten Klebefläche (13, 14) verlaufenden Richtung erstreckt, um an einem inneren Rand (47) der Tür (6) des Möbels (3) anzuliegen, wenn das zweite Befestigungselement (8) auf der zweiten Seitenwand (5) des Möbels (3) ruht, um eine korrekte Anordnung des zweiten Befestigungselements (8) zu gestatten.

13. Befestigungssystem (1) nach einem der vorhergehenden Ansprüche, umfassend:
ein Führungsprofil (22),
ein drittes Befestigungselement (23), das eine fünfte Klebefläche (25), die zum Kleben an die Tür (6) des Möbels (3) geeignet ist, eine sechste Klebefläche (26), die parallel zu der fünften Klebefläche (25) verläuft und dieser gegenüberliegt und zum Kleben an das Führungsprofil (22) geeignet ist, und eine fünfte entfernbare Schutzfolie (27) umfasst, die anfänglich die fünfte Klebefläche (25) bedeckt, und
einen Schlitten (24), der an einer Tür (21) des eingebauten Haushaltsgeräts (2) befestigt werden kann und so geformt ist, dass er verschiebbar an das Führungsprofil (22) gekoppelt werden kann.

14. Befestigungssystem (1) nach Anspruch 13, wobei das dritte Befestigungselement (23) eine dritte mehrfach trennbare/verbindbare Verbindungsvorrichtung (31) aufweist, die zwischen der fünften Klebefläche (25) und der sechsten Klebefläche (6) angeordnet ist.

15. Befestigungssystem (1) nach Anspruch 14, wobei die dritte mehrfach trennbare/verbindbare Verbindungsvorrichtung (31) einen fünften Körper (36), der die fünfte Klebefläche (25) stützt, und einen sechsten Körper (37) umfasst, der die sechste Klebefläche (26) stützt und so mit dem fünften Körper (36) verbunden ist, dass er mehrfach trennbar/verbindbar ist.

16. Verfahren zur Befestigung eines eingebauten Haushaltsgeräts (2) an einem Möbel (3) unter Verwendung des Befestigungssystems (1) nach einem der vorhergehenden Ansprüche, wobei das Befestigungsverfahren folgenden Schritt aufweist:
Kleben der zweiten Klebefläche (11) des ersten Befestigungselements (7) an die erste Seitenwand (4) des Möbels (3), indem zuerst die zweite Schutzfolie (16) entfernt wird,
Kleben der vierten Klebefläche (14) des zweiten Befestigungselements (8) an die zweite Seitenwand (5) des Möbels (3), indem zuerst die vierte Schutzfolie (18) entfernt wird,
Einführen des eingebauten Haushaltsgeräts (2) in das Möbel (3), wobei die erste entfernbare Schutzfolie (15) und die dritte Schutzfolie (17) in Position belassen werden,
Entfernen der ersten entfernbaren Schutzfolie (15), um die erste Klebefläche (10) des ersten Befestigungselements (7) an die erste Seitenwand (9) des eingebauten Haushaltsgeräts (2) zu kleben, und
Entfernen der dritten entfernbaren Schutzfolie (17), um die dritte Klebefläche (13) des zweiten Befestigungselements (8) an die zweite Seitenwand (12) des eingebauten Haushaltsgeräts (2) zu kleben.

17. Verfahren zum Befestigen eines eingebauten Haushaltsgeräts (2) nach Anspruch 16, umfassend nach dem Kleben der vierten Klebefläche (14) des zweiten Befestigungselements (8) an die zweite Seitenwand (5) des Möbels und vor dem Einführen des eingebauten Haushaltsgeräts (2) in das Möbel (3) den weiteren Schritt des Verstellens der Dicke der Abstandhaltergruppe (38), so dass die erste Seitenwand (9) des eingebauten Haushaltsgeräts (2) mit der ersten Klebefläche (10) in Kontakt ist und die zweite Seitenwand (12) des eingebauten Haushaltsgeräts (2) mit der dritten Klebefläche (13) in Kontakt ist, wenn das eingebaute Haushaltsgerät (2) in das Möbel (3) eingeführt worden ist.

18. Verfahren zum Befestigen eines eingebauten Haushaltsgeräts (2) an einem Möbel (3) nach Anspruch 17, wobei das Befestigungsverfahren den folgenden Schritt aufweist:
Kleben einer sechsten Klebefläche (26) an ein Führungsprofil (22),
Befestigen eines Schlittens (24) an einer Tür (21) des eingebauten Haushaltsgeräts (2),
Koppeln des Schlittens (24) an das Führungsprofil (22) vor oder nach der Befestigung des Schlittens (24) an der Tür (21) des eingebauten Haushaltsgeräts (2) und
Kleben einer fünften Klebefläche (25) an die Tür (6) des Möbels (3), indem zunächst eine fünfte entfernbare Schutzfolie (27) entfernt und die Tür (6) des Möbels (3) in Richtung der Tür (21) des eingebauten Haushaltsgeräts (2), die den Schlitten (24) und das Führungsprofil (22) stützt, geschlossen wird.

19. Möbel (3), umfassend ein Befestigungssystem (1) nach einem der Ansprüche 1 - 15 und ein eingebautes Haushaltsgerät (2) in dem Möbel (3), das eine erste Seitenwand (4) und eine zweite Seitenwand (5), die parallel zueinander sind, und eine Tür (6) aufweist, die an der zweiten Seitenwand (5) scharniermäßig befestigt ist.

## Revendications

1. Système de fixation (1) pour un appareil électroménager encastré (2) à l'intérieur d'un meuble (3) qui a une première paroi latérale (4) et une deuxième paroi latérale (5) parallèles l'une à l'autre et une porte (6) articulée sur la deuxième paroi latérale (5) ; le système de fixation (1) comporte :
un premier élément de fixation (7) comprenant une première surface adhésive (10) apte à être collée sur une première paroi latérale (9) de l'appareil électroménager encastré (2), une deuxième surface adhésive (11) parallèle et opposée à la première surface adhésive (10) et apte à être collée sur la première paroi latérale (4) du meuble (3), un premier film protecteur amovible (15) qui recouvre initialement la première surface adhésive (10), et un deuxième film protecteur amovible (16) qui recouvre initialement la deuxième surface adhésive (11) ; et
un deuxième élément de fixation (8) comprenant une troisième surface adhésive (13) apte à être collée sur une deuxième paroi latérale (12) de l'appareil électroménager encastré (2) et une quatrième surface adhésive (14) parallèle et opposée à la troisième surface adhésive (13) et apte à être collée sur la deuxième paroi latérale (5) du meuble (3), un troisième film protecteur amovible (17) qui recouvre initialement la troisième surface adhésive (13), et un quatrième film protecteur amovible (18) qui recouvre initialement la quatrième surface adhésive (14), **caractérisé en ce que** le deuxième élément de fixation (8) comprend un groupe d'espacement (38) qui est interposé entre la troisième surface adhésive (13) et la quatrième surface adhésive (14) et a une épaisseur réglable pour faire varier la distance entre la troisième surface adhésive (13) et la quatrième surface adhésive (14).

2. Système de fixation (1) selon la revendication précédente,
le premier film protecteur amovible (15) et/ou le deuxième film protecteur amovible (16) ayant une première languette de retrait (19) saisissable qui s'étend au-delà de la première surface adhésive (10) et/ou de la deuxième surface adhésive (11) pour faire saillie à l'extérieur de la première paroi latérale (9) de l'appareil électroménager encastré (2) lorsque l'appareil électroménager encastré (2) est inséré à l'intérieur du meuble (3) ; et
le troisième film protecteur amovible (17) et/ou le quatrième film protecteur amovible (18) ayant une deuxième languette de retrait (20) saisissable qui s'étend au-delà de la troisième surface adhésive (13) et/ou de la quatrième surface adhésive (14) pour faire saillie à l'extérieur de la deuxième paroi latérale (12) de l'appareil électroménager encastré (2) lorsque l'appareil électroménager encastré (2) est inséré à l'intérieur du meuble (3).

3. Système de fixation (1) selon l'une quelconque des revendications précédentes,
le premier élément de fixation (7) comprenant un premier dispositif de liaison (29) séparable/pouvant être relié plusieurs fois qui est interposé entre la première surface adhésive (10) et la deuxième surface adhésive (11) ; et/ou
le deuxième élément de fixation (8) comprenant un deuxième dispositif de liaison (30) séparable/pouvant être relié plusieurs fois qui est interposé entre la troisième surface adhésive (13) et la quatrième surface adhésive (14).

4. Système de fixation (1) selon la revendication précédente,
le premier dispositif de liaison (29) séparable/pouvant être relié plusieurs fois comprenant un premier corps (32) qui supporte la première surface adhésive (10) et un deuxième corps (33) qui supporte la deuxième surface adhésive (11) et est relié au premier corps (32) de manière à être séparable/pouvoir être relié plusieurs fois ; et/ou
le deuxième dispositif de liaison (30) séparable/pouvant être relié plusieurs fois comprenant un troisième corps (34) qui supporte la troisième surface adhésive (13) et un quatrième corps (35) qui supporte la quatrième surface adhésive (14) et est relié au troisième corps (34) de manière à être séparable/pouvoir être relié plusieurs fois.

5. Système de fixation (1) selon la revendication 3 ou 4, chaque dispositif de liaison (29, 30) séparable utilisant un système de fermeture pourvu de micro-fentes et de micro-crochets.

6. Système de fixation (1) selon l'une quelconque des revendications 1 à 5, le groupe d'espacement (38) comprenant :
une plaque intérieure (40) qui est reliée à la troisième surface adhésive (13) ;
une plaque extérieure (42) qui est reliée à la quatrième surface adhésive (14) ;
un siège cylindrique (41) solidement contraint sur la plaque intérieure (40) ou la plaque extérieure (42) ; et un élément de réglage (43) qui est inséré dans le siège cylindrique (41), est monté rotatif sur la plaque extérieure (42) ou sur la plaque intérieure (40), et est conçu pour être mis en rotation par rapport au siège cylindrique (41) afin de faire varier la distance entre les deux plaques (40, 42).

7. Système de fixation (1) selon la revendication 6, le siège cylindrique (41) étant fileté et l'élément de réglage (43) étant fileté et vissé dans le siège cylindrique (41).

8. Système de fixation (1) selon la revendication 6 ou 7, les deux plaques (40, 42) étant reliées l'une à l'autre au moyen d'un élément de liaison flexible (44) en forme de « U ».

9. Système de fixation (1) selon l'une quelconque des revendications 1 à 5, le groupe d'espacement (38) comprenant :
une plaque intérieure (40) qui est reliée à la troisième surface adhésive (13) ;
une plaque extérieure (42) qui est reliée à la quatrième surface adhésive (14) ;
un premier élément de réglage (49) et un deuxième élément de réglage (50), qui sont interposés entre la plaque intérieure (40) et la plaque extérieure (42), sont reliés à la plaque intérieure (40) et à la plaque extérieure (42) et sont conçus pour être déplaçables l'un par rapport à l'autre entre une position initiale (A), dans laquelle la distance entre les deux plaques (40, 42) est minimale, et une position finale (B), dans laquelle la distance entre les deux plaques (40, 42) est maximale.

10. Système de fixation (1) selon la revendication 9, le premier élément de réglage (49) comprenant une première partie d'accouplement (51) ; le deuxième élément de réglage (50) comprenant une deuxième partie d'accouplement (52) ; et la première partie d'accouplement (51) et la deuxième partie d'accouplement (52) étant agencées et dotées d'une forme pour se chevaucher, au moins partiellement, l'une l'autre, lorsque le premier élément de réglage (49) et le deuxième élément de réglage (50) se déplacent de la position initiale (A) à la position finale (B), de manière à augmenter la distance entre les deux plaques (40, 42).

11. Système de fixation (1) selon la revendication 9 ou 10,
le premier élément de réglage (49) et le deuxième élément de réglage (50) pouvant tourner l'un par rapport à l'autre et comprenant des moyens de préhension (53), qui sont conçus pour être saisis pour faire tourner le premier élément de réglage (49) et le deuxième élément de réglage (50) l'un par rapport à l'autre et s'étendent au-delà de la plaque intérieure (40) et de la plaque extérieure (42) pour faire saillie à l'extérieur de la deuxième paroi latérale (12) de l'appareil électroménager encastré (2), lorsque l'appareil électroménager encastré (2) est inséré à l'intérieur du meuble (3) ;
l'ensemble d'espacement (38) comprenant des moyens d'attache (55) pour empêcher la rotation du premier élément de réglage (49) et du deuxième élément de réglage (50) l'un par rapport à l'autre, une fois qu'une position souhaitée a été atteinte.

12. Système de fixation (1) selon l'une quelconque des revendications 7 à 11, le deuxième élément de fixation (8) comprenant une plaque de référence amovible (46) qui s'étend dans une direction orthogonale aux troisième et quatrième surfaces adhésives (13, 14) pour venir en appui contre un bord intérieur (47) de la porte (6) du meuble (3) lorsque le deuxième élément de fixation (8) repose sur la deuxième paroi latérale (5) du meuble (3), de manière à permettre une disposition correcte du deuxième élément de fixation (8).

13. Système de fixation (1) selon l'une quelconque des revendications précédentes et comprenant :
un profilé de guidage (22) ;
un troisième élément de fixation (23) comprenant une cinquième surface adhésive (25) apte à être collée sur la porte (6) du meuble (3), une sixième surface adhésive (26) parallèle et opposée à la cinquième surface adhésive (25) et apte à être collée sur le profilé de guidage (22), et un cinquième film protecteur amovible (27) qui recouvre initialement la cinquième surface adhésive (25) ; et
un coulisseau (24) qui peut être fixé à une porte (21) de l'appareil électroménager encastré (2) et doté d'une forme pour pouvoir être accouplé de manière coulissante au profilé de guidage (22).

14. Système de fixation (1) selon la revendication 13, le troisième élément de fixation (23) comprenant un troisième dispositif de liaison (31) séparable/pouvant être relié plusieurs fois qui est interposé entre la cinquième surface adhésive (25) et la sixième surface adhésive (6) .

15. Système de fixation (1) selon la revendication 14, le troisième dispositif de liaison (31) séparable/pouvant être relié plusieurs fois comprenant un cinquième corps (36) qui supporte la cinquième surface adhésive (25) et un sixième corps (37) qui supporte la sixième surface adhésive (26) et est relié au cinquième corps (36) de manière à être séparable/pouvoir être relié plusieurs fois.

16. Procédé de fixation d'un appareil électroménager encastré (2) sur un meuble (3) à l'aide du système de fixation (1) selon l'une quelconque des revendications précédentes ; le procédé de fixation comporte les étapes de :
collage de la deuxième surface adhésive (11) du premier élément de fixation (7) sur la première paroi latérale (4) du meuble (3), en retirant d'abord le deuxième film protecteur (16) ;
collage de la quatrième surface adhésive (14) du deuxième élément de fixation (8) sur la deuxième paroi latérale (5) du meuble (3), en retirant d'abord le quatrième film protecteur (18) ;
insertion de l'appareil électroménager encastré (2) dans le meuble (3), en laissant en position le premier film protecteur amovible (15) et le troisième film protecteur (17) ;
retrait du premier film protecteur amovible (15) pour coller la première surface adhésive (10) du premier élément de fixation (7) sur la première paroi latérale (9) de l'appareil électroménager encastré (2) ; et
retrait du troisième film protecteur amovible (17) pour coller la troisième surface adhésive (13) du deuxième élément de fixation (8) sur la deuxième paroi latérale (12) de l'appareil électroménager encastré (2).

17. Procédé de fixation d'un appareil électroménager encastré (2) selon la revendication 16, comprenant, après le collage de la quatrième surface adhésive (14) du deuxième élément de fixation (8) sur la deuxième paroi latérale (5) du meuble et avant l'insertion de l'appareil électroménager encastré (2) dans le meuble (3), l'étape supplémentaire de réglage de l'épaisseur du groupe d'espacement (38) de sorte que, une fois que l'appareil électroménager encastré (2) a été inséré dans le meuble (3), la première paroi latérale (9) de l'appareil électroménager encastré (2) soit en contact avec la première surface adhésive (10) et la deuxième paroi latérale (12) de l'appareil électroménager encastré (2) soit en contact avec la troisième surface adhésive (13).

18. Procédé de fixation d'un appareil électroménager encastré (2) sur un meuble (3) selon la revendication 17 ; le procédé de fixation comporte les étapes de :
collage d'une sixième surface adhésive (26) sur un profilé de guidage (22) ;
fixation d'un coulisseau (24) à une porte (21) de l'appareil électroménager encastré (2) ;
accouplement du coulisseau (24) au profilé de guidage (22) avant ou après avoir fixé le coulisseau (24) à la porte (21) de l'appareil électroménager encastré (2) ; et
collage d'une cinquième surface adhésive (25) sur la porte (6) du meuble (3), en retirant d'abord un cinquième film protecteur amovible (27) et en fermant la porte (6) du meuble (3) vers la porte (21) de l'appareil électroménager encastré (2) supportant le coulisseau (24) et le profilé de guidage (22).

19. Meuble (3) comprenant un système de fixation (1) selon l'une quelconque des revendications 1 à 15 et un appareil électroménager encastré (2) à l'intérieur du meuble (3) qui a une première paroi latérale (4) et une deuxième paroi latérale (5) parallèles l'une à l'autre et une porte (6) articulée sur la deuxième paroi latérale (5) .
